# EUROPÄISCHE PATENTSCHRIFT

(11) **EP 2 372 483 B1**
(45) Veröffentlichungstag und Bekanntmachung des Hinweises auf die Patenterteilung: **31.10.2012**
(21) Anmeldenummer: 10156666.9
(22) Anmeldetag: 16.03.2010
(51) Int. Cl.: G05D 23/19, F24F 11/00, F24F 3/048

(54) **Verfahren zur Regelung von Raumkomfortgrössen**
Method for regulating a room comfort quantity
Procédé de régulation d'une grandeur liée au confort dans une pièce

(43) Veröffentlichungstag der Anmeldung: 05.10.2011
(73) Patentinhaber: Siemens Aktiengesellschaft, 80333 München (DE)
(72) Erfinder: Gao, Tianyun, 8050 Zürich (CH); Gwerder, Markus, 6312 Steinhausen (CH); Schumacher, Benedikt, 8706 Meilen (CH); Walti, Marcel, 5603 Staufen (CH)

(56) Entgegenhaltungen:
- EP-A2- 0 851 179
- EP-B1- 0 146 488
- WO-A1-2009/103563
- WO-A2-2007/027632
- US-A- 4 164 172

## Beschreibung

### Technisches Gebiet der Erfindung

Die Erfindung bezieht sich auf ein Verfahren der im Oberbegriff des Anspruchs 1 genannten Art.

Solche Verfahren eignen sich beispielsweise zum Heizen, Kühlen und Lüften von Räumen mit Hilfe der Zufuhr von entsprechend vorbehandelter Luft, wobei vorbestimmte Qualitätskriterien für gewisse Raumkomfortgrössen einhaltbar und dennoch Energiekosten minimierbar sind.

### Stand der Technik

Eine Vielzahl derartiger Verfahren zur Verminderung von Energiekosten sind aus Fach- und Patentliteratur bekannt.

Aus EP 1 074 900 A ist eine prädiktive Einrichtung zum Regeln oder Steuern von Versorgungsgrössen eines Gebäudes bekannt. Mit der vorgeschlagenen Einrichtung ist eine Komfort- und Energieterme aufweisende Kostenfunktion minimierbar.

Aus WO 2007 / 042 371 A ist eine Anordnung zur optimalen Steuerung der Verwendung wenigstens einer freien Energiequelle bekannt.

In WO 2007 / 042 390 A wird vorgeschlagen, die Unsicherheit in der Kenntnis der internen und externen Wärmegewinne in einem Gebäude in einer Regelstrategie für Raumklimagrössen zu berücksichtigen.

WO 2007 / 096 377 A offenbart ein Verfahren zur prädiktiven Steuerung und/oder Regelung einer wenigstens ein Kraft-Wärmekopplungs-Gerät aufweisenden Energieanlage eines Gebäudes.

Ferner werden beispielsweise in EP0851 179 A und WO 2009 /103 563 A Verfahren zum Heizen, Kühlen und Lüften von Räumen mit Hilfe der Zufuhr von entsprechend konditionierter Luft vorgestellt, durch welche auch Energiekosten reduzierbar sind.

Zur Regelung des Raumklimas offenbart EP 0 146 488B ein System, welches eine Einrichtung erfordert, durch welche ein gleichzeitiges Abgeben von warmer, kalter und neutraler Luft aus gemeinsamer Quelle an mehrere Raumzonen ermöglicht wird.

In WO 2007/027632 A wird vorgeschlagen, das Raumklima in einem Gebäude zu regeln, indem die relative Feuchtigkeit zusammen mit der Temperatur mittels sogenannter MEMS (microelectromechanical systems) erfasst und zur Regelung mit einer vorgegebenen Soll-Komfort-Zone verglichen wird. Die Soll-Komfort-Zone definiert in einen gewissen, für die relative Feuchte geltenden Komfortbereich, den von der relativen Feuchte abhängigen Komfortbereich für die Temperatur. Eine unerwünschte Abweichung zwischen Ist- und Sollwertepaar wird durch Zuführen entsprechend aufbereiteter Luft ausgeglichen.

### Technische Aufgabe der Erfindung und Lösung

Der Erfindung liegt die Aufgabe zugrunde, ein weiteres Verfahren zum Heizen, Kühlen und Lüften von Räumen zu schaffen, durch welches vorbestimmte Qualitätskriterien für gewisse Raumkomfortgrössen einhaltbar und Energiekosten minimierbar sind. Das Verfahren soll nutzbringend in Systemen anwendbar sein, mit denen sowohl nur ein einzelner Raum als auch mehrere Räume eines Gebäudes mindestens teilweise mittels zugeführter und entsprechend behandelter Luft zu klimatisieren sind.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung mit Hilfe von Zeichnungen näher erläutert.

### Angaben zu den Zeichnungen

Es zeigen:
Fig. 1 eine Anlage zum Heizen, Kühlen, Lüften und Klimatisieren von mehreren Räumen,
Fig. 2 ein Blockschaltbild eines Moduls einer Einrichtung zum Regeln und Steuern von Raumklimagrössen mit Hilfe der Anlage,
Fig. 3 ein Diagramm zur Funktionsweise der Einrichtung zum Regeln und Steuern von Raumklimagrössen, und
Fig. 4 ein weiteres Diagramm zur Funktionsweise der Einrichtung zum Regeln und Steuern von Raumklimagrössen.

### Detaillierte Beschreibung der Erfindung

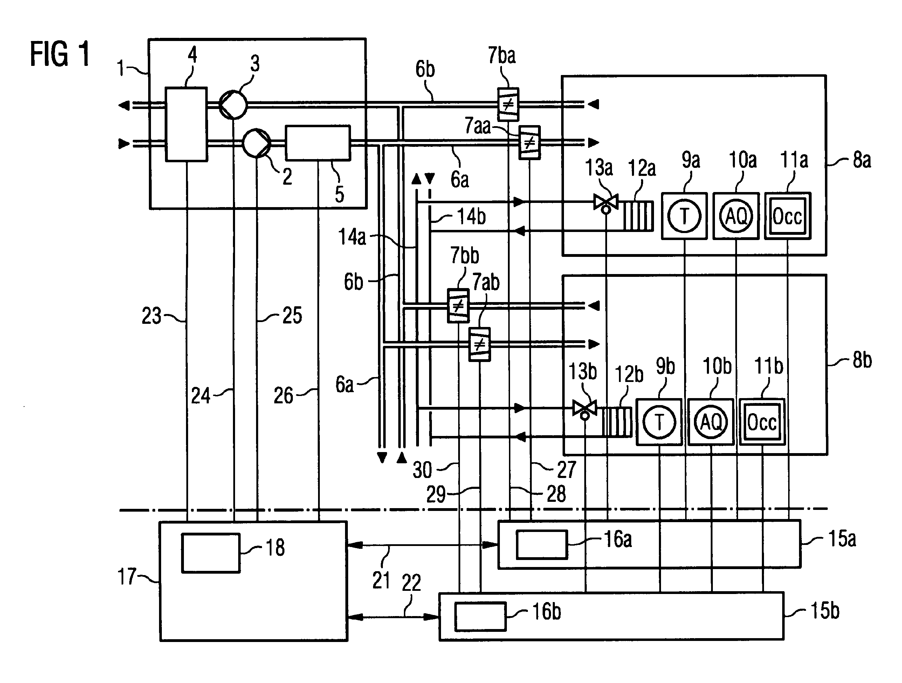

In der Fig. 1 bezeichnet 1 eine sogenannte Primär-Lüftungsanlage, welche typischerweise einen Zuluftventilator 2, einen Abluftventilator 3, eine Einrichtung 4 zur Energierückgewinnung und eine weitere Einrichtung 5 zur Luftbehandlung aufweist.

Über einen Zuluftkanal 6a versorgt die Primär-Lüftungsanlage 1 angeschlossene Räume 8a und 8b mit behandelter Luft, wobei Luft über einen Abluftkanal 6b aus den angeschlossenen Räumen 8a und 8b abgeführt wird.

Die Einrichtung 4 zur Energierückgewinnung umfasst typischerweise einen Wärmetauscher und bei Bedarf weitere Systeme zur Luftbehandlung, beispielsweise Partikelfilter, oder Systeme zur Rückführung mindestens eines Teils der Abluft aus dem Abluftkanal 6b in den Zuluftkanal 6a. So kann bei Bedarf beispielsweise Feuchtigkeit aus dem Abluftkanal 6b in den Zuluftkanal 6a zurückgeführt werden.

Die weitere Einrichtung 5 zur Luftbehandlung umfasst typischerweise Systeme zum Heizen oder Kühlen der in den Zuluftkanal 6a eingespeisten Zuluft. Bei Bedarf verfügt die Einrichtung 5 zur Luftbehandlung auch über weitere Systeme zur Luftbehandlung, beispielsweise zur Reinigung, Entfeuchtung oder Befeuchtung.

Grundsätzlich ist die Anzahl der über den Zuluftkanal 6a und den Abluftkanal 6b an die Primär-Lüftungsanlage 1 angeschlossenen Räume für das hier vorgestellte Verfahren zur Regelung von Raumkomfortgrössen unerheblich und kann also in weiten Grenzen variieren. Das Verfahren eignet sich also für einen einzelnen Raum wie auch für beispielsweise fünfzig Räume. Um eine übersichtliche und trotzdem allgemeine Darstellung eines Ausführungsbeispiels zu erreichen, sind in der Fig. 1 lediglich zwei Räume 8a und 8b dargestellt. Bei einem einzelnen Raum sind Zuluft und Abluft beispielsweise über ein in der Fig. 1 nicht dargestelltes Fassadenlüftungsgerät austauschbar, wobei das hier vorgestellte Regelverfahren zum Regeln von Raumkomfortgrössen im einzelnen Raum anwendbar ist.

Es versteht sich von selbst, dass in diesem Text mit der Bezeichnung Raum auch eine Zone oder Raumzone gemeint ist; folglich wird auf eine Schreibweise wie etwa Raum und/oder Zone verzichtet.

Der dem Raum 8a oder 8b zugeführte Volumenstrom der Zuluft ist über wenigstens je eine Luftklappe regelbar. Mit Vorteil ist der dem ersten Raum 8a zugeführte Volumenstrom der Luft über eine im Zuluftkanal 6a angeordnete erste Luftklappe 7aa und eine im Abluftkanal 6b angeordnete zweite Luftklappe 7ba regelbar. In gleicher Weise ist der dem zweiten Raum 8b zugeführte Volumenstrom der Luft vorteilhafterweise über eine im Zuluftkanal 6a angeordnete dritte Luftklappe 7ab und eine im Abluftkanal 6b angeordnete vierte Luftklappe 7bb regelbar.

Die vier Luftklappen 7aa, 7ba, 7ab und 7bb sind mit Vorteil stetig ansteuerbare Klappen oder Ventile, deren Durchlass von einem geschlossenen Zustand in einen offenen Zustand durch ein entsprechendes Steuersignal stetig veränderbar ist.

In weiteren vorteilhaften Varianten der Anlage zum Heizen, Kühlen, Lüften und Klimatisieren von Räumen umfasst die Anlage zusätzliche Systeme zum Heizen oder Kühlen der Räume. Beispielhaft für eine derartige Variante, ist in der Fig. 1 ein Heizungsvorlaufrohr 14a und ein Heizungsrücklaufrohr 14b eines zusätzlichen Heizsystems dargestellt. Im ersten Raum 8a ist ein erster über ein erstes Radiatorventil 13a steuerbarer Radiator 12a angeordnet und an das Heizungsvorlaufrohr 14a und das Heizungsrücklaufrohr 14 b angeschlossen. In gleicher Art ist im zweiten Raum 8b ist ein zweiter über ein zweites Radiatorventil 13b steuerbarer Radiator 12b angeordnet und an das Heizungsvorlaufrohr 14a und das Heizungsrücklaufrohr 14 b angeschlossen. Zur Steuerung und/oder Regelung des zusätzlichen Heizungssystems sind das erste

Radiatorventil 12a über eine erste mindestens unidirektional ausgelegte Steuerleitung 19a mit der ersten Steuer- und Regeleinrichtung 15a, und das zweite Radiatorventil 12b über eine zweite mindestens unidirektional ausgelegte Steuerleitung 19b mit der zweiten Steuer- und Regeleinrichtung 15b verbunden.

In einer weiteren Variante der Anlage sind in den Räumen 8a und 8b zusätzliche Systeme zum Kühlen angeordnet, beispielsweise Kühldecken. Grundsätzlich ist das hier vorgeschlagene Verfahren zur Regelung wenigstens einer Raumkomfortgrösse durch einen Fachmann ohne weiteres nutzbringend an geeignete Anlagen zum Heizen, Kühlen, Lüften und Klimatisieren von Räumen anpassbar, wobei der Aufbau der Anlagen in weiten Grenzen variieren kann.

Das hier vorgeschlagene Verfahren zur Regelung wenigstens einer Raumkomfortgrösse in wenigstens einem Raum, ist vorteilhafterweise durch eine jeweils dem Raum 8a oder 8b zugeordnete erste Regel- und Steuereinrichtung 15a beziehungsweise zweite Regel- und Steuereinrichtung 15b und eine der Primär-Lüftungsanlage 1 zugeordnete dritte Regel-und Steuereinrichtung 17 durchführbar. Vorteilhafterweise ist eine erste geregelte Raumkomfortgrösse in jedem der versorgten Räume die Raumtemperatur. Je nach Bedarf sind weitere Raumkomfortgrössen geregelt, beispielsweise ein Mass für die Luftfeuchtigkeit oder eine die Luftqualität qualifizierende Grösse, wie etwa der Gehalt an Kohlendioxid, der Gehalt an flüchtigen organischen Verbindungen (volatile organic compounds VOC), Partikel oder Schadstoffe. Die im vorgeschlagenen Verfahren eingebundene erste und zweite Regel- und Steuereinrichtung 15a beziehungsweise 15b bewirkt grundsätzlich ein rückgeführtes Regelverfahren (closed loop control) zur Regelung der vorgesehenen Raumkomfortgrössen. Zwecks des besagten rückgeführten Regelverfahrens sind in den versorgten Räumen 8a und 8b jeweils erforderliche Sensoren zur Messung der vorgesehenen Raumkomfortgrössen angeordnet und zur Übermittlung von Messwerten mit der zugeordneten Regel- und Steuereinrichtung 15a beziehungsweise 15b drahtlos oder drahtgebunden verbunden.

Beispielhaft sind im ersten Raum 8a ein erster Raumtemperatursensor 9a, ein erster Luftqualitätssensor 10a und ein erster Raumbelegungszustandsdetektor 11a angeordnet und zur Übertragung von Energie und/oder Information jeweils mit der ersten Regel- und Steuereinrichtung 15a verbunden. Zu dem sind im zweiten Raum 8b ein zweiter Raumtemperatursensor 9b, ein zweiter Luftqualitätssensor 10b und ein zweiter Raumbelegungszustandsdetektor 11b angeordnet und zur Übertragung von Energie und/oder Information jeweils mit der zweiten Regel- und Steuereinrichtung 15a verbunden.

Zur Durchführung des Verfahrens zur Regelung wenigstens einer Raumkomfortgrösse, verfügt die erste Regel- und Steuereinrichtung 15a vorteilhafterweise über ein erstes Taktbetriebsmodul 16a. Zudem verfügt die zweite Regel- und Steuereinrichtung 15b über ein zweites Taktbetriebsmodul 16b. Ausserdem verfügt die dritte Regel- und Steuereinrichtung 17 zur Durchführung des Verfahrens zur Regelung wenigstens einer Raumkomfortgrösse vorteilhafterweise über ein Koordinationsmodul 18 zur Koordination des in der Primär-Lüftungsanlage 1 für die angeschlossenen Räume 8a und 8b nachgefragten Luftbedarfs.

Zur Durchführung des Verfahrens zur Regelung der Raumkomfortgrössen, ist die dritte Regel- und Steuereinrichtung 17 durch drahtgebundene oder drahtlose - mit Vorteil bidirektionale - Datenkommunikationskanäle, einerseits mit der ersten Regel- und Steuereinrichtung 15a und mit der zweiten Regel- und Steuereinrichtung 15b, und andrerseits mit der Primärlüftungsanlage 1 verbunden. Die besagten Datenkommunikationskanäle sind in der Fig. 1 beispielhaft durch einen ersten, die dritte Steuer- und Regeleinheit 17 mit der ersten Steuer- und Regeleinheit 15a verbindenden Datenkommunikationskanal 21, durch einen zweiten, die dritte Steuer- und Regeleinheit 17 mit der zweiten Steuer- und Regeleinheit 15b verbindenden Datenkommunikationskanal 22, durch einen dritten, die dritte Steuer- und Regeleinheit 17 mit der Einrichtung 4 zur Energierückgewinnung verbindenden

Datenkommunikationskanal 23, durch einen vierten, die dritte Steuer- und Regeleinheit 17 mit dem Abluftventilator 3 verbindenden Datenkommunikationskanal 24, durch einen fünften, die dritte Steuer- und Regeleinheit 17 mit dem Zuluftventilator 2 verbindenden Datenkommunikationskanal 25, und durch einen sechsten, die dritte Steuer- und Regeleinheit 17 mit der Einrichtung 5 zur Luftbehandlung verbindenden Datenkommunikationskanal 26 dargestellt.

Zur Durchführung des Verfahrens zur Regelung der Raumkomfortgrössen, sind die erste und die zweite Steuer- und Regeleinheit 15a und 15b durch weitere drahtgebundene oder drahtlose - mit Vorteil bidirektionale - Datenkommunikationskanäle mit den zugeordneten Antrieben der Luftklappen zur Volumenstromregelung verbunden. Die besagten Datenkommunikationskanäle sind in der Fig. 1 beispielhaft durch einen siebten, die erste Steuer- und Regeleinheit 15a mit der ersten Luftklappe 7aa verbindenden Datenkommunikationskanal 27, durch einen achten, die erste Steuer- und Regeleinheit 15a mit der zweiten Luftklappe 7ba verbindenden Datenkommunikationskanal 28, durch einen neunten, die zweite Steuer- und Regeleinheit 15b mit der dritten Luftklappe 7ab verbindenden

Datenkommunikationskanal 29, und durch einen zehnten, die zweite Steuer- und Regeleinheit 15b mit der vierten Luftklappe 7bb verbindenden Datenkommunikationskanal 30 dargestellt. In einer vorteilhaften Implementierung der Anlage sind die zehn Datenkommunikationskanäle 21, 22, 23, 24,25, 26, 27, 28, 29, 30 durch ein Bussystem implementiert, mit Vorteil gemäss einem Standard, beispielsweise gemäss BACnet oder KNX.

Eine Implementierung der drei Regel- und Steuereinrichtungen 15a, 15b und 17 umfasst typischerweise ein entsprechend programmiertes Mikrocomputersystem, welches in der Regel mehrere auf Mikroprozessoren und/oder Mikrocomputer basierende Geräte umfasst.

Mit dem hier vorgeschlagenen Verfahren zur Regelung wenigstens einer Raumkomfortgrösse wird angestrebt, eine für den Luftwechsel im Raum beziehungsweise in den Räumen notwendige Energie so tief wie möglich zu halten. Deshalb werden alle Volumenströme von Zuluft und Abluft konsequent dem Bedarf der versorgten Räume angepasst. Bei Heiz- oder bei Kühlbedarf wird deswegen angestrebt, den Bedarf ohne Erhöhung des Volumenstroms zu decken, beispielsweise durch eine Veränderung der Zulufttemperatur oder durch die Radiatoren 12a oder 12b (Fig. 1). Erst wenn der Bedarf durch Veränderung der Zulufttemperatur oder den Einsatz eines vorhandenen Zusatzsystems nicht mehr gedeckt werden kann, beispielsweise wenn die Zulufttemperatur einen maximalen oder einen minimalen Sollwert erreicht hat, erfolgt eine Erhöhung des Volumenstroms.

Ist im Raum ein minimaler Volumenstrom von Zuluft oder Abluft erreicht und sind die überwachten Raumkomfortgrössen innerhalb angestrebten Komfortbändern, werden vorteilhafterweise die den Raum versorgenden Volumenströme der Zuluft und der Abluft durch vollständiges Schliessen der entsprechenden Klappen unterbunden. Ist eine der überwachten Raumkomfortgrössen ausserhalb des angestrebten Komfortbandes, wird vorteilhafterweise der minimale Volumenstrom durch entsprechendes Öffnen der Klappen der Zuluft und der Abluft eingeschaltet. Dies führt zu einem Taktbetrieb von Luftzufuhr und -abfuhr, wodurch die für den Luftwechsel im Raum beziehungsweise in den Räumen notwendige Energie wesentlich reduzierbar ist.

Ein wesentliches Merkmal des hier vorgestellten Verfahrens zur Regelung einer Raumkomfortgrösse im Raum 8a oder 8b ist also das Zuführen eines Luftstroms in den Raum in einem sogenannter Taktbetrieb, in dem der Luftstrom, unabhängig von einem Raumnutzungszustand, nach vorbestimmten Regeln selbsttätig abwechslungsweise eingeschaltet und ausgeschaltet wird. Der Luftstrom wird dann ausgeschaltet, wenn die geregelten Raumkomfortgrössen innerhalb eines jeweils zugeordneten Komfortbandes liegen. Wenn mindestens eine geregelte Raumkomfortgrösse ausserhalb des ihr zugeordneten Komfortbandes liegt, wird der Luftstrom eingeschaltet, indem zur Bewirkung einer erforderlichen Veränderung des aktuellen Werts der besagten Raumkomfortgrösse dem Raum der bezüglich Volumenstrom minimierte Luftstrom zugeführt wird, wobei der Luftstrom durch die Primär-Lüftungsanlage 1 derart aufbereitet wird, dass der Volumenstrom des zugeführten Luftstroms minimiert ist. Das Zuführen des Luftstroms im regelbasierten Taktbetrieb wird vorteilhafterweise durch eine entsprechende Programmierung der Taktbetriebsmodule 16a und 16b, sowie des Koordinationsmoduls 18 implementiert.

Dadurch, dass der Taktbetrieb unabhängig von einem beispielhaft mittels des Raumbelegungszustandsdetektors 11a oder 11b ermittelten Raumnutzungszustand eingesetzt wird, wird die zur Umwälzung von Luft eingesetzte Energie auch dann minimiert, wenn der Raum 8a oder 8b nicht belegt ist.

In Varianten des Taktbetriebs erfolgt das Ausschalten des Luftstroms zeitabhängig oder abhängig von Energiegewinnen im Raum 8a beziehungsweise 8b.

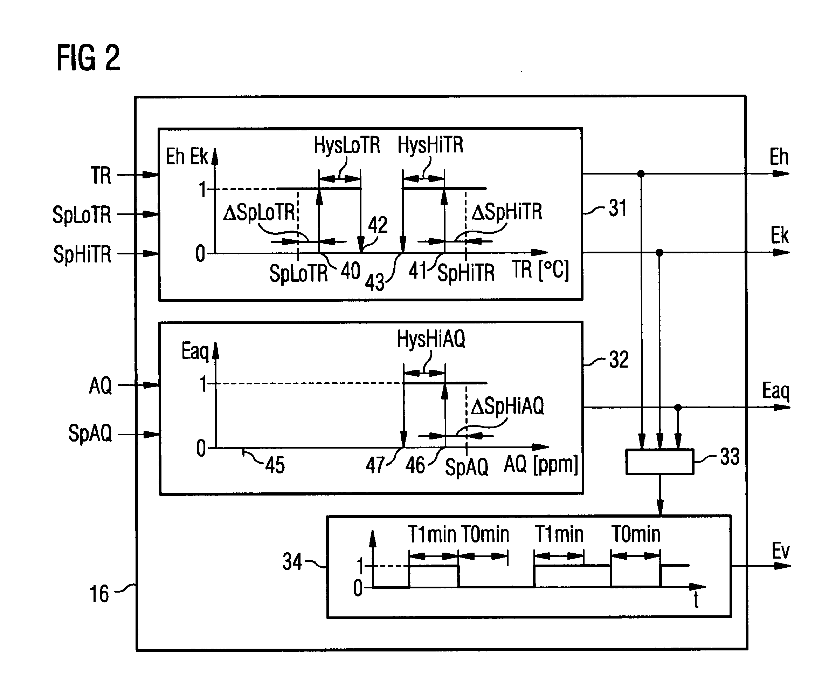

Die Fig. 2 zeigt ein Blockschaltbild und auch einen Wirkungsplan des Taktbetriebsmoduls 16. Das Taktbetriebsmodul 16 umfasst vorteilhafterweise für jede geregelte Raumkomfortgrösse einen Funktionsblock. In einer vorteilhaften Ausführung des Funktionsblocks sind für die zugeordnete Raumkomfortgrösse ein inneres Komfortband, ein äusseres Komfortband und ein mittleres Komfortband definiert, wobei die beiden Grenzwerte des mittleren Komfortbandes auf einer der Raumkomfortgrösse zugeordneten Koordinate innerhalb des äusseren Komfortbandes liegen, und wobei die beiden Grenzwerte des inneren Komfortbandes auf der Koordinate innerhalb des mittleren Komfortbandes liegen.

Einerseits erlaubt der Funktionsblock dann ein Ausschalten des minimierten Volumenstroms, wenn ein für die Raumkomfortgrösse ermittelter Wert im inneren Komfortband liegt. Andrerseits verlangt der Funktionsblock ein Einschalten des minimierten Volumenstroms, wenn der für die Raumkomfortgrösse ermittelte Wert das mittlere Komfortband verlässt und das äussere Komfortband erreicht. Beispielhaft ist das besagte Erlauben des Ausschaltens des minimierten Volumenstroms im Diagramm des Funktionsblocks mit einer logischen "0" dargestellt, während das besagte Verlangen des Einschaltens des minimierten Volumenstroms mit einer logischen "1" dargestellt ist. Der geltende Zustand logisch "0" oder logisch "1" wird vom Funktionsblock beispielhaft über ein Signal an den Verknüpfungsblock 33 und an die zuständige erste oder zweite Regel- und Steuereinrichtung 15a bzw. 15b übermittelt.

In einer vorteilhaften Ausführung der ersten bzw. zweiten Regel und Steuereinrichtung 15a bzw. 15b wird der minimierte Volumenstrom dann dem entsprechenden Raum zugeführt, wenn mindestens einer der dem Raum zugeordneten Funktionsblöcke des entsprechenden Taktbetriebsmoduls 16 das Einschalten des minimierten Volumenstroms verlangt. Vorteilhafterweise wird der dem Raum zugeführte minimierte Volumenstrom aber nur dann abgeschaltet, wenn alle dem Raum zugeordneten Funktionsblöcke das Ausschalten des minimierten Volumenstroms erlauben. Das eigentliche Ein- oder Ausschalten des dem Raum 8a oder 8b zugeführten Volumenstroms wird von der ersten bzw. zweiten Regel und Steuereinrichtung 15a bzw. 15b durch Ansteuern der entsprechenden Luftklappen 7aa, 7ab, 7ba und 7bb veranlasst, wobei vorteilhafterweise Information über jeweilige Klappenstellungen und Volumenströme auch an das Koordinationsmodul 18 weitergeleitet wird.

Beispielhaft optimiert das in der Fig. 2 dargestellte Taktbetriebsmodul 16 die Raumkomfortgrössen Raumtemperatur TR und Luftqualität AQ und umfasst damit einen ersten, das Verhalten der Temperaturregelung steuernder Funktionsblock 31 und einen zweiten, das Verhalten der Regelung einer Luftqualitätsgrösse steuernder Funktionsblock 32. Mit Vorteil verfügt das Taktbetriebsmodul 16 noch über einen Verknüpfungsblock 33 und einen Freigabeblock 34.

Zur Optimierung der Temperaturregelung ist im Funktionsblock 31 auf einer der Raumtemperatur TR zugeordneten Koordinate ein äusseres Komfortband durch einen unteren Temperatursollwert SpLoTR und einen oberen Temperatursollwert SpHiTR definiert. Zur Optimierung der Temperaturregelung sind mit Vorteil auf der der Raumtemperatur TR zugeordneten Koordinate ausserdem ein durch eine untere Einschaltschwelle 40 und eine obere Einschaltschwelle 41 definiertes mittleres Komfortband und ein durch eine untere Ausschaltschwelle 42 und eine obere Ausschaltschwelle 43 definiertes inneres Komfortband festgelegt.

Einerseits erlaubt der Funktionsblock 31 dann ein Ausschalten des minimierten Volumenstroms, wenn ein für die Raumtemperatur TR ermittelter Wert im inneren Komfortband liegt. Andrerseits verlangt der Funktionsblock 31 ein Einschalten des minimierten Volumenstroms, wenn der für die Raumtemperatur TR ermittelte Wert das mittlere Komfortband erreicht. Beispielhaft ist das besagte Erlauben des Ausschaltens des minimierten Volumenstroms im Diagramm des Funktionsblocks 31 mit einer logischen "0" dargestellt, während das besagte Verlangen des Einschaltens des minimierten Volumenstroms mit einer logischen "1" dargestellt ist. Der geltende Zustand logisch "0" oder logisch "1" wird vom Funktionsblock 31 beispielhaft mit einem ersten Freigabesignal Eh für den zum Heizen konditionierten Volumenstrom und mit einem zweiten Freigabesignal Ek für den zum Kühlen konditioniert Volumenstrom signalisiert. Das erste Freigabesignal Eh und das zweite Freigabesignal Ek werden an den Verknüpfungsblock 33 und an die zuständige erste oder zweite Regel- und Steuereinrichtung 15a bzw. 15b übermittelt.

Zur Optimierung der Regelung einer Luftqualitätsgrösse ist im Funktionsblock 32 auf einer der Luftqualitätsgrösse AQ zugeordneten Koordinate ein äusseres Komfortband durch einen unteren Grenzwert 45 und einen Luftqualitätssollwert SpAQ definiert. Zur Optimierung der Regelung der Luftqualitätsgrösse sind mit Vorteil auf der der Luftqualitätsgrösse AQ zugeordneten Koordinate ausserdem ein durch den unteren Grenzwert 45 und eine Einschaltschwelle 46 definiertes mittleres Komfortband und ein durch den unteren Grenzwert 45 und eine Ausschaltschwelle 47 definiertes inneres Komfortband festgelegt.

Einerseits erlaubt der Funktionsblock 32 dann ein Ausschalten des minimierten Volumenstroms, wenn ein für die Luftqualitätsgrösse AQ ermittelter Wert im inneren Komfortband liegt. Andrerseits verlangt der Funktionsblock 32 ein Einschalten des minimierten Volumenstroms, wenn der für die Luftqualitätsgrösse AQ ermittelte Wert das mittlere Komfortband erreicht. Beispielhaft ist das besagte Erlauben des Ausschaltens des minimierten Volumenstroms im Diagramm des Funktionsblocks 32 mit einer logischen "0" dargestellt, während das besagte Verlangen des Einschaltens des minimierten Volumenstroms mit einer logischen "1" dargestellt ist. Der geltende Zustand logisch "0" oder logisch "1" wird vom Funktionsblock 32 beispielhaft über ein drittes Freigabesignal Eaq an den Verknüpfungsblock 33 und an die zuständige erste oder zweite Regel- und Steuereinrichtung 15a bzw. 15b übermittelt.

Der Verknüpfungsblock 33 generiert in einem dem Freigabeblock 34 übermittelten Ausgangssignal die Information, ob wenigstens eines der drei Freigabesignale Eh, Ek oder Eaq das Einschalten des minimierten Volumenstroms verlangt. Im Freigabeblock 34 wird aufgrund der Information des vom Verknüpfungsblock 33 übermittelten Ausgangssignals ein viertes, zeitabhängiges Freigabesignal Ev generiert. Grundsätzlich wird das vierte Freigabesignal so generiert, dass das Abschalten des minimierten Volumenstroms dann erlaubt wird, wenn keines der drei von den beiden Funktionsblöcken generierten Freigabesignale Eh, Ek oder Eaq das Einschalten des minimierten Volumenstroms verlangt, wobei mit Vorteil als zusätzliche Bedingungen für den Signalwert logisch "1" eine minimale Impulszeit T1min und für den Signalwert logisch "0" eine minimale Pausenzeit T0min einzuhalten sind. Das vierte Freigabesignal Ev wird beispielhaft an die zuständige erste oder zweite Regel- und Steuereinrichtung 15a bzw. 15b übermittelt.

Zu jeder geregelten Raumkomfortgrösse werden den entsprechenden Funktionsblöcken 31 bzw. 32 ein im zugeordneten Raum 8a bzw. 8b ermittelter Istwert der Raumkomfortgrösse und vorteilhafterweise auch Information über mindestens ein für die Raumkomfortgrösse angestrebtes Komfortband übermittelt. Beispielhaft werden dem ersten Funktionsblock 31 die für den zugeordneten Raum ermittelte Raumtemperatur TR, der untere Temperatursollwert SpLoTR und der obere Temperatursollwert SpHiTR übermittelt. Ausserdem werden dem zweiten Funktionsblock 32 der für den zugeordneten Raum ermittelte Wert der Luftqualitätsgrösse AQ sowie der Luftqualitätssollwert SpAQ übermittelt.

Die dem Raum 8a oder 8b (Fig. 1) zugeordnete Regel- und Steuereinrichtung 15a beziehungsweise 15b generiert mit Vorteil einen von der im entsprechenden Raum ermittelten Raumtemperatur TR abhängigen Volumenstromsollwert VSp.

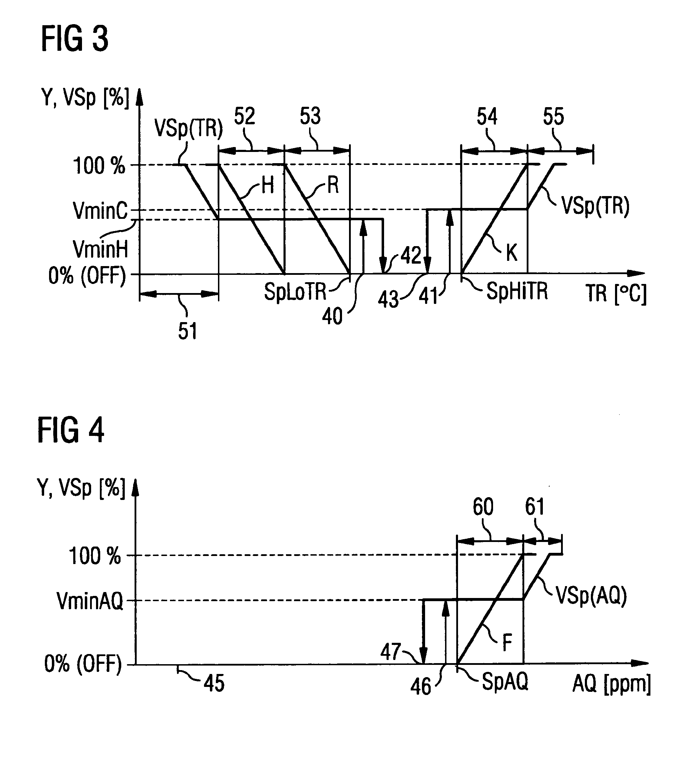

In der Fig. 3 ist ein beispielhafter prinzipieller Verlauf VSp(TR) des Volumenstromsollwerts VSp in Abhängigkeit der Raumtemperatur TR dargestellt. Der Raumtemperatur TR ist die Koordinate zugeordnet, auf welcher bereits im Zusammenhang mit der Fig. 2 beschriebene charakteristische Werte eingetragen sind, nämlich der untere Temperatursollwert SpLoTR, der obere Temperatursollwert SpHiTR, die untere Einschaltschwelle 40, die obere Einschaltschwelle 41, die untere Ausschaltschwelle 42 und die obere Ausschaltschwelle 43.

Ausgehend von einem niederen Wert der Raumtemperatur wird der hier mit 100% bezeichnete maximale Volumenstromsollwert VSp in einem ersten Temperaturbereich 51 auf einen für das Heizen definierten minimalen Volumenstromsollwert VminH minimiert. In einem zweiten Temperaturbereich 52 und einem dritten Temperaturbereich 53 wird der auf das Heizen bezogene minimale Volumenstromsollwert VminH beibehalten. In dem an den dritten Temperaturbereich 53 anschliessenden äusseren Komfortband wird der auf das Heizen bezogene minimale Volumenstromsollwert VminH entsprechend den im Zusammenhang mit der Fig. 2 beschriebenen Regeln bei der unteren Ausschaltschwelle 42 auf Null gesetzt und nach einem allfälligen Absinken der Raumtemperatur TR auf die untere Einschaltschwelle 40 wieder auf den für das Heizen definierten minimalen Volumenstromsollwert VminH gesetzt. Steigt die Raumtemperatur TR im äusseren Komfortband bis zur oberen Einschaltschwelle 41, wird der Volumenstromsollwert VSp von Null auf einen für das Kühlen definierten minimalen Volumenstromsollwert VminC erhöht, wobei der für das Kühlen definierte minimale Volumenstromsollwert VminC in einem oberhalb des äusseren Komfortbandes anschliessenden vierten Temperaturbereich 54 beibehalten und in einem anschliessenden fünften Temperaturbereich 55 auf den mit 100% bezeichneten maximalen Volumenstromsollwert VSp gesetzt wird. Sinkt beim Kühlen der Wert der Raumtemperatur TR im mittleren Komfortband unter die obere Ausschaltschwelle 43, wird der Volumenstromsollwert VSp auf Null gesetzt.

Der beim Kühlen geltende minimale Volumenstromsollwert VminC und der beim Heizen geltende minimale Volumenstromsollwert VminH können grundsätzlich verschieden gross sein und bei Bedarf von weiteren Messgrössen abhängen, beispielsweise von der Temperatur der Zuluft oder der Raumtemperatur TR.

Mit H ist ein prinzipieller von der Raumtemperatur abhängiger Verlauf einer Heizbedarfsmeldung dargestellt, die beispielhaft im zweiten Temperaturbereich 52 mit zunehmender Raumtemperatur TR von einem mit 100% bezeichneten Maximalwert gegen 0% hin verläuft. In einer vorteilhaften Ausführungsvariante der ersten und/oder zweiten Regel- und Steuereinrichtung 15a bzw. 15b wird eine der ermittelten Raumtemperatur TR entsprechende Heizbedarfsmeldung an die Primär-Lüftungsanlage 1 übermittelt. Damit kann erreicht werden, dass die Temperatur der über den Zuluftkanal 6a zugeführten Luft bei minimiertem Volumenstrom veränderbar ist.

Mit K ist ein prinzipieller von der Raumtemperatur abhängiger Verlauf einer Kühlbedarfsmeldung dargestellt, die beispielhaft im vierten Temperaturbereich 54 mit zunehmender Raumtemperatur TR von einem mit 0% bezeichneten Minimalwert gegen 100% hin verläuft. In einer vorteilhaften Ausführungsvariante der ersten und/oder zweiten Regel- und Steuereinrichtung 15a bzw. 15b wird eine der ermittelten Raumtemperatur TR entsprechende Kühlbedarfsmeldung an die Primär-Lüftungsanlage 1 übermittelt. Damit kann erreicht werden, dass die Temperatur der über den Zuluftkanal 6a zugeführten Luft bei minimiertem Volumenstrom veränderbar ist.

Mit R ist ein prinzipieller von der Raumtemperatur abhängiger Verlauf eines Steuersignals für ein im entsprechenden Raum angeordnetes Radiatorventil dargestellt, das beispielhaft im dritten Temperaturbereich 53 mit zunehmender Raumtemperatur TR von einem mit 100% bezeichneten Maximalwert gegen 0% hin verläuft. In einer vorteilhaften Ausführungsvariante der ersten und/oder zweiten Regel- und Steuereinrichtung 15a bzw. 15b wird ein der ermittelten Raumtemperatur TR entsprechendes Steuersignal an das Radiatorventil übermittelt. Damit kann erreicht werden, dass die Raumtemperatur TR auch über eine Zusatzheizung bei minimiertem Volumenstrom veränderbar ist. Die Fig. 3 zeigt ein stationäres Regelverhalten für Regelelemente mit rein proportionalem Verhalten (I-Verhalten). Typischerweise werden Regelelemente eingesetzt, welche in der Lage sind, den stationären Regelfehler zu eliminieren, beispielsweise durch integrierendes Verhalten (I-Verhalten). Die in der Fig. 3 ausserhalb des äusseren Komfortbandes dargestellten fünf Temperaturbereiche 51, 52, 53, 54 und 55 würden dann alle die Breite Null aufweisen.

In der Fig. 4 ist ein beispielhafter prinzipieller Verlauf VSp(AQ) des Volumenstromsollwerts VSp in Abhängigkeit einer als Teilchenverhältnis (parts per million ppm) messbaren Luftqualitätsgrösse AQ dargestellt. Der Luftqualitätsgrösse AQ ist die Koordinate zugeordnet, auf welcher bereits im Zusammenhang mit der Fig. 2 beschriebene charakteristische Werte eingetragen sind, nämlich der Luftqualitätssollwert SpAQ, der untere Grenzwert 45, die Einschaltschwelle 46 und die Ausschaltschwelle 47.

Steigt der Wert der Luftqualitätsgrösse AQ in dem vom unteren Grenzwert 45 und dem Luftqualitätssollwert SpAQ begrenzten Komfortband bis zur Einschaltschwelle 46 an, wird der Volumenstromsollwert VSp von Null auf einen für die Frischluftzufuhr definierten minimalen Volumenstromsollwert VminAQ erhöht, wobei der für die Frischluftzufuhr definierte minimale Volumenstromsollwert VminAQ in einem oberhalb des äusseren Komfortbandes anschliessenden ersten Luftqualitätsbereich 60 beibehalten und in einem oberhalb an den ersten Luftqualitätsbereich 60 anschliessenden zweiten Luftqualitätsbereich 61 auf den mit 100% bezeichneten maximalen Volumenstromsollwert VSp gesetzt wird. Sinkt der Wert der Luftqualitätsgrösse AQ im mittleren Komfortband unter die Ausschaltschwelle 47, wird der Volumenstromsollwert VSp auf Null gesetzt.

Mit F ist ein prinzipieller von der Luftqualitätsgrösse AQ abhängiger Verlauf einer Frischluftbedarfsmeldung dargestellt, die beispielhaft im ersten Luftqualitätsbereich 60 mit zunehmendem Wert von einem mit 0% bezeichneten Minimalwert gegen 100% hin verläuft. In einer vorteilhaften Ausführungsvariante der ersten und/oder zweiten Regel- und Steuereinrichtung 15a bzw. 15b wird eine dem ermittelten Wert der Luftqualitätsgrösse AQ entsprechende Frischluftbedarfsmeldung an die Primär-Lüftungsanlage 1 übermittelt. Damit kann erreicht werden, dass der Anteil an Frischluft der über den Zuluftkanal 6a zugeführten Luft bei minimiertem Volumenstrom veränderbar ist.

Die Fig. 4 zeigt ein stationäres Regelverhalten für Regelelemente mit rein proportionalem Verhalten (P-Verhalten). Typischerweise werden Regelelemente eingesetzt, welche in der Lage sind, den stationären Regelfehler zu eliminieren, beispielsweise durch integrierendes Verhalten (I-Verhalten). Die in der Fig. 4 ausserhalb des äusseren Komfortbandes dargestellten zwei Luftqualitätsbereiche 60 und 61 würden dann beide die Breite Null aufweisen.

In einer vorteilhaften Weiterentwicklung des Verfahrens zur Regelung wenigstens einer Raumkomfortgrösse in wenigstens einem der Räume 8a oder 8b wird, wenn ein von der ersten oder zweiten Regel- und Steuereinrichtung 15a oder 15b für den Raum 8a oder 8b ermittelter Istwert der Raumkomfortgrösse ausserhalb des entsprechenden mittleren Komfortbands liegt, der auf die besagte Raumkomfortgrösse des zugeführten Luftstroms bezogene Sollwert der Primär-Lüftungsanlage 1 durch ein Signal der ersten oder zweiten Regel- und Steuereinrichtung 15a oder 15b wesentlich verändert und auf einen vorbestimmten Wert gesetzt wird, dermassen, dass eine beschleunigte Verschiebung des Istwerts der Raumkomfortgrösse in das innere Komfortband bewirkbar ist. Der besagte Sollwert wird beispielsweise wesentlich verändert, wenn er etwa in die Mitte des inneren Komfortbandes gesetzt wird.

In einer weiteren vorteilhaften Weiterentwicklung des Verfahrens zur Regelung wenigstens einer Raumkomfortgrösse in wenigstens einem der Räume 8a oder 8b wird, wenn ein von der ersten oder zweiten Regel- und Steuereinrichtung 15a oder 15b für den Raum 8a oder 8b ermittelter Istwert der Raumkomfortgrösse ausserhalb des entsprechenden mittleren Komfortbands liegt, ein auf die besagte Raumkomfortgrösse des zugeführten Luftstroms bezogener Sollwert eines dem Raum 8a bzw. 8b zugeordneten und vorteilhafterweise der ersten Luftklappe 7aa bzw. dritten Luftklappe 7ab nachgeschalteten Luft-Nachbehandlungsmoduls durch ein Signal der entsprechenden ersten oder zweiten Regel- und Steuereinrichtung 15a oder 15b wesentlich verändert und auf einen vorbestimmten Wert gesetzt wird, dermassen, dass eine beschleunigte Verschiebung des Istwerts der Raumkomfortgrösse in das innere Komfortband bewirkbar ist. Der besagte Sollwert wird beispielsweise wesentlich verändert, wenn er etwa in die Mitte des inneren Komfortbandes gesetzt wird. Das Luft-Nachbehandlungsmodul ist beispielsweise ein Nach-Erwärmer.

In einer vorteilhaften Weiterentwicklungsvariante des Verfahrens zur Regelung wenigstens einer Raumkomfortgrösse in wenigstens einem der Räume 8a oder 8b wird, wenn ein von der ersten oder zweiten Regel- und Steuereinrichtung 15a oder 15b für den Raum 8a oder 8b ermittelter Istwert der Raumkomfortgrösse ausserhalb des entsprechenden mittleren Komfortbands liegt, zur beschleunigten Verschiebung des Istwerts in das mittlere Komfortband, im zugeführten Luftstrom der Wert der besagten Raumkomfortgrösse derart verändert, dass die gewünschte Beschleunigung eintritt, ein zulässiger Grenzwert jedoch nicht über- beziehungsweise unterschritten wird. Dass also beispielsweise der Wert der Temperatur in dem dem Raum 8a oder 8b zugeführten Luftstrom eine vordefinierte maximal zulässige Zulufttemperatur oder eine maximal zulässige Feuchte nicht überschreitet, beziehungsweise eine minimal zulässige Zulufttemperatur oder eine minimal zulässige Feuchte nicht unterschreitet.

Mit Vorteil werden überwachte Raumkomfortgrössen durch die erste und zweite Regel- und Steuereinrichtung 15a oder 15b grundsätzlich unabhängig von der Funktionsweise des Taktbetriebsmoduls 16 in das für die entsprechende Raumkomfortgrösse definierte äussere Komfortband geregelt.

Die erste Regel- und Steuereinrichtung 15a (Fig. 1) und die zweite Regel- und Steuereinrichtung 15b umfassen vorteilhafterweise je eine Ausführung 16a beziehungsweise 16b des Taktbetriebsmoduls 16

In einer vorteilhaften Ausführung der Anlage liefern die erste Regel- und Steuereinrichtung 15a und die zweite Regel-und Steuereinrichtung 15b notwendige Information für einen optimalen Betrieb der Primär-Lüftungsanlage 1 über den ersten Datenkommunikationskanal 21 bzw. den zweiten Datenkommunikationskanal 22 an die dritte Regel- und Steuereinrichtung 17. Die besagte Information umfasst vorteilhafterweise aktuelle Stellungen der Luftklappen 7aa, 7ab, 7ba und 7bb, und/oder aktuelle Ist- und Sollwerte der Volumenströme durch die Luftklappen 7aa, 7ab, 7ba und 7bb. Durch die Nutzung der Information sind der Zuluftventilator 2 und der Abluftventilator 3 derart betreibbar, dass die Volumenstromsollwerte der versorgten Räume 8a und 8b mit möglichst tiefen Drehzahlen und damit mit hoher Energieeffizienz erreicht werden. Verlangt keiner der versorgten Räume 8a und 8b einen Volumenstrom beziehungsweise ist keiner der Volumenstromsollwerte grösser Null, so werden der Zuluftventilator 2, der Abluftventilator 3, die Einrichtung 5 zur Luftbehandlung und die Einrichtung 4 zur Energierückgewinnung abgeschaltet.

Bestehende Lüftungsanlagen, in denen die für das Einbinden des Taktbetriebsmoduls 16a oder 16b notwendigen Datenpunkte oder Schnittstellen verfügbar sind, können durch eine zusätzliche Software mit dem Verfahren aufgerüstet werden. Bei einer BACnet-Lösung, um hier ein Beispiel zu nennen, ist es oft der Fall, dass die notwendigen Datenpunkte über einen Datenbus verfügbar sind.

### Bezugszeichen

- 1: Primär-Lüftungsanlage
- 2: Zuluftventilator
- 3: Abluftventilator
- 4: Einrichtung zur Energierückgewinnung
- 5: Einrichtung zur Luftbehandlung
- 6a: Zuluftkanal
- 6b: Abluftkanal
- 7aa: Luftklappe zur Volumenstromregelung, erste
- 7ab: Luftklappe zur Volumenstromregelung, dritte
- 7ba: Luftklappe zur Volumenstromregelung, zweite
- 7bb: Luftklappe zur Volumenstromregelung, vierte
- 8a, 8b: Raum, erster, zweiter
- 9a: Raumtemperatursensor, erster
- 9b: Raumtemperatursensor, zweiter
- 10a: Luftqualitätssensor, erster
- 10b: Luftqualitätssensor, zweiter
- 11a: Raumbelegungszustandsdetektor, erster
- 11b: Raumbelegungszustandsdetektor, zweiter
- 12a: Radiator, erster
- 12b: Radiator, zweiter
- 13a: Radiatorventil, erstes
- 13b: Radiatorventil, zweites
- 14a: Heizungsvorlaufrohr
- 14b: Heizungsrücklaufrohr
- 15a: Regel- und Steuereinrichtung, erste
- 15b: Regel- und Steuereinrichtung, zweite
- 17: Regel- und Steuereinrichtung, dritte
- 16a: Taktbetriebsmodul, erstes
- 16b: Taktbetriebsmodul, zweites
- 18: Koordinationsmodul
- 19a: Steuerleitung, erste
- 19b: Steuerleitung, zweite
- 21: Datenkommunikationskanal, erster
- 22: Datenkommunikationskanal, zweiter
- 23: Datenkommunikationskanal, dritter
- 24: Datenkommunikationskanal, vierter
- 25: Datenkommunikationskanal, fünfter
- 26: Datenkommunikationskanal, sechster
- 27: Datenkommunikationskanal, siebter
- 28: Datenkommunikationskanal, achter
- 29: Datenkommunikationskanal, neunter
- 30: Datenkommunikationskanal, zehnter
- 31: Funktionsblock, erster (Temperatur)
- 32: Funktionsblock, zweiter (Luftqualität)
- 33: Verknüpfungsblock
- 34: Freigabeblock
- 40: untere Einschaltschwelle
- 41: obere Einschaltschwelle
- 42: untere Ausschaltschwelle
- 43: obere Ausschaltschwelle
- 45: untere Grenzwert
- 46: Einschaltschwelle
- 47: Ausschaltschwelle
- 51: Temperaturbereich, erster
- 52: Temperaturbereich, zweiter
- 53: Temperaturbereich, dritter
- 54: Temperaturbereich, vierter
- 55: Temperaturbereich, fünfter
- 60: Luftqualitätsbereich, erster
- 61: Luftqualitätsbereich, zweiter
- TR: Raumtemperatur
- SpLoTR: unterer Temperatursollwert
- SpHiTR: oberer Temperatursollwert
- AQ: Luftqualitätsgrösse
- SpAQ: Luftqualitätssollwert
- Eh: Freigabesignal heizen
- Ek: Freigabesignal kühlen
- Eaq: Freigabesignal Luft erneuern
- Ev: Freigabesignal Luftstrom
- VminC: minimaler Volumenstromsollwert Kühlen
- VminH: minimaler Volumenstromsollwert Heizen
- VSp: Volumenstromsollwert
- VminAQ: minimaler Volumenstromsollwert Frischluftzufuhr
- T1min: minimale Impulszeit
- T0min: minimale Pausenzeit
- H: Heizbedarfsmeldung
- R: Steuersignal Radiatorventil
- K: Kühlbedarfsmeldung
- F: Frischluftbedarfsmeldung

## Patentansprüche

1. Verfahren zur Regelung wenigstens einer Raumkomfortgrösse (TR; AQ) in wenigstens einem Raum (8a; 8b), mit Hilfe eines über einen Zuluftkanal (6a) zugeführten Luftstroms,
wobei die geregelten Raumkomfortgrössen (TR; AQ) von einer Reglereinrichtung (15a; 15b; 17) je in einem der jeweiligen Raumkomfortgrösse zugeordneten Komfortband geregelt werden,
wobei der Luftstrom dem Raum (8a; 8b) in einem selbsttätig ausgeführten sogenannten Taktbetrieb (16) zugeführt wird, in dem der Luftstrom abwechslungsweise eingeschaltet und ausgeschaltet wird,
wobei im besagten Taktbetrieb (16), unabhängig von einem Raumnutzungszustand (11a; 11b), der dem Raum zugeführte Luftstrom dann ausgeschaltet wird, wenn die geregelten Raumkomfortgrössen innerhalb des jeweils zugeordneten Komfortbandes liegen, und wobei im besagten Taktbetrieb (16),
wenn mindestens eine der geregelten Raumkomfortgrössen (TR; AQ) ausserhalb des ihr zugeordneten Komfortbandes liegt, zur Bewirkung einer erforderlichen Veränderung des aktuellen Werts der besagten Raumkomfortgrösse (TR; AQ), dem Raum (8a; 8b) der bezüglich Volumenstrom minimierte Luftstrom zugeführt wird, wobei der Luftstrom durch eine Primär-Lüftungsanlage (1) derart aufbereitet wird, dass der Volumenstrom des zugeführten Luftstroms minimiert ist,
**dadurch gekennzeichnet,**
**dass** für die wenigstens eine geregelte Raumkomfortgrösse ein inneres Komfortband, ein äusseres Komfortband und ein mittleres Komfortband definiert sind, wobei die beiden Grenzwerte des mittleren Komfortbandes auf einer der Raumkomfortgrösse zugeordneten Koordinate innerhalb des äusseren Komfortbandes liegen, und wobei die beiden Grenzwerte des inneren Komfortbandes auf der Koordinate innerhalb des mittleren Komfortbandes liegen, und,
**dass** ein Ausschalten des minimierten Volumenstroms verlangt wird, wenn ein für die Raumkomfortgrösse ermittelter Wert im inneren Komfortband liegt, und dass ein Einschalten des minimierten Volumenstroms verlangt wird, wenn der für die Raumkomfortgrösse ermittelte Wert das mittlere Komfortband verlässt und das äussere Komfortband (40,41) erreicht.

2. Verfahren nach Anspruch 1, **dadurch gekennzeichnet,**
**dass** der dem Raum (8a; 8b) zugeführte Luftstrom ausgeschaltet wird, indem eine im Zuluftkanal (6a) des Raums (8a; 8b) angeordnete Klappe (7) durch ein Signal (27;28;29;30) der Reglereinrichtung (15a; 15b) geschlossen wird.

3. Verfahren nach einem vorangehenden Anspruch, **dadurch gekennzeichnet,**
**dass** der dem Raum zugeführte Luftstrom ausgeschaltet wird, indem die Primär-Lüftungsanlage (1) durch ein Signal (23,; 24; 25; 26) der Reglereinrichtung (15a; 15b; 17) ausgeschaltet wird.

4. Verfahren nach einem vorangehenden Anspruch, **dadurch gekennzeichnet,**
**dass**, wenn ein von der Reglereinrichtung für den Raum ermittelter Istwert der wenigstens einen geregelten Raumkomfortgrösse ausserhalb des entsprechenden mittleren Komfortbands liegt, der auf die besagte Raumkomfortgrösse des zugeführten Luftstroms bezogene Sollwert der Primär-Lüftungsanlage durch ein Signal der Reglereinrichtung wesentlich verändert und auf einen vorbestimmten Wert gesetzt wird, dermassen, dass eine beschleunigte Verschiebung des Istwerts der besagten Raumkomfortgrösse in das innere Komfortband bewirkbar ist.

5. Verfahren nach einem vorangehenden Anspruch, **dadurch gekennzeichnet,**
**dass**, wenn ein von der Reglereinrichtung für den Raum ermittelter Istwert der wenigstens einen geregelten Raumkomfortgrösse ausserhalb des entsprechenden mittleren Komfortbands liegt, ein auf die besagte Raumkomfortgrösse des zugeführten Luftstroms bezogene Sollwert eines dem Raum zugeordneten Luft-Nachbehandlungsmoduls durch ein Signal der Reglereinrichtung wesentlich verändert und auf einen vorbestimmten Wert gesetzt wird, dermassen, dass eine beschleunigte Verschiebung des Istwerts der besagten Raumkomfortgrösse in das innere Komfortband bewirkbar ist.

6. Verfahren nach einem vorangehenden Anspruch, **dadurch gekennzeichnet,**
**dass**, wenn die geregelten Raumkomfortgrössen eines gewissen Raumes innerhalb der entsprechenden inneren Komfortbänder liegen, ein in einem Abluftkanal des besagten Raumes angeordneter Ventilator ausschaltet wird.

7. Verfahren nach einem vorangehenden Anspruch, **dadurch gekennzeichnet,**
**dass**, die Primär-Lüftungsanlage dann abgeschaltet wird, wenn in allen durch die Primär-Lüftungsanlage versorgbaren Räumen die geregelten Raumkomfortgrössen innerhalb der entsprechenden inneren Komfortbänder liegen, oder dann, wenn alle durch die Primär-Lüftungsanlage versorgbaren Räume nicht belegt sind.

8. Verfahren nach einem vorangehenden Anspruch, **dadurch gekennzeichnet, dass** eine Menge der mit der Reglereinrichtung geregelten Raumkomfortgrössen die Raumtemperatur umfasst.

9. Verfahren nach einem vorangehenden Anspruch, **dadurch gekennzeichnet, dass** die Menge der mit der Reglereinrichtung geregelten Raumkomfortgrössen die Luftqualität umfasst.

10. Verfahren nach einem vorangehenden Anspruch, **dadurch gekennzeichnet, dass** die Menge der mit der Reglereinrichtung geregelten Raumkomfortgrössen die Luftfeuchtigkeit umfasst.

## Claims

1. Method for regulating at least one room comfort variable (TR; AQ) in at least one room (8a; 8b), with the aid of an air flow supplied via an inlet air duct (6a),
wherein the regulated room comfort variables are regulated by a regulator device (15a; 15b; 17) in a comfort band assigned to the respective room comfort variable,
wherein the air flow is supplied to the room (8a; 8b) in an automatically executed so-called pulsed operation (16), in which the air flow is alternately switched on and switched off,
wherein, in the said pulsed operation (16), independently of a room usage state (11a; 11b), the air flow supplied to the room is switched off if the regulated room comfort variable lies within the respectively assigned comfort band, and whereby in the said pulsed operation (16),
if at least one room comfort variable (TR; AQ) lies outside the comfort band assigned to it, to bring about a required change to the current value of the said room comfort variable (TR; AQ), the room (8a; 8b) is supplied with the air flow minimised in respect of the volume flow, with the air flow being prepared by a primary ventilation system (1) such that the volume flow of the supplied air flow is minimised, **characterised in that**
an inner comfort band, an outer comfort band and a central comfort band are defined for the at least one regulated room comfort variable, wherein the two limit values of the central comfort band lie at a coordinate assigned the room comfort variable within the outer comfort band, and wherein the two limit values of the inner comfort band lie at the coordinates within the central comfort band, and
a demand is made for the minimised volume flow to be switched off if a value established for the room comfort variable lies in the inner comfort band, and a demand is made for switching on the minimised volume flow if the value established for the room comfort variable departs from the central comfort band and reaches the outer comfort band (40, 41).

2. Method according to claim 1, **characterised in that** the air flow supplied to the room (8a; 8b) is switched off by a flap (7) arranged in the inlet air duct (6a) of the room (8a; 8b) being closed by a signal (27; 28; 29; 30) of the regulator device (15a; 15b).

3. Method according to a preceding claim, **characterised in that**
the air flow supplied to the room (8a; 8b) is switched off by the primary ventilation system (1) being switched off by a signal (23; 24; 25; 26) of the regulator device (15a; 15b; 17).

4. Method according to a preceding claim, **characterised in that**,
if an actual value of the room comfort variable established by the regulator device for the room lies outside the corresponding central comfort band, the setpoint value related to the said room comfort variable of the supplied air flow is significantly changed by a signal of the regulation device and set to a prespecified value such that an accelerated displacement of the actual value of the room comfort variable into the inner comfort band is able to be effected.

5. Method according to a preceding claim, **characterised in that**,
if an actual value of the room comfort variable established by the regulator device for the room lies outside the corresponding central comfort band, the setpoint value related to the said room comfort variable of a an air postprocessing module assigned to the room is significantly changed by a signal of the regulation device and is set to a prespecified value such that an accelerated displacement of the actual value of the room comfort variable into the inner comfort band is able to be effected.

6. Method according to a preceding claim, **characterised in that**,
if the regulated room comfort variables of a certain room lie within the corresponding inner comfort bands, a ventilator arranged in an exhaust air duct of the said room is switched off.

7. Method according to a preceding claim, **characterised in that**
the primary ventilation system is switched off if, in all rooms able to be supplied by the primary ventilation system, the regulated room comfort variables lie within the corresponding inner comfort bands, or if all rooms able to be supplied by the primary ventilation system are not occupied.

8. Method according to a preceding claim, **characterised in that** a set of the room comfort variables regulated by the regulation device includes the room temperature.

9. Method according to a preceding claim, **characterised in that** the set of the room comfort variables regulated by the regulation device includes the air quality.

10. Method according to a preceding claim, **characterised in that** the set of the room comfort variables regulated by the regulation device includes the air humidity.

## Revendications

1. Procédé de régulation d'au moins une grandeur (TR ; AQ) liée au confort d'une pièce, dans au moins une pièce (8a ; 8b), à l'aide d'un débit d'air amené par un canal d'air frais (6a),
dans lequel les grandeurs (TR ; AQ) régulées liées au confort d'une pièce sont régulées par un mécanisme régulateur (15a ; 15b ; 17) dans une bande de confort associée à la grandeur de confort respective,
le débit d'air étant envoyé dans la pièce (8a ; 8b) dans un mode de fonctionnement automatique dit cadencé (16) dans lequel le débit d'air est alternativement activé et désactivé,
dans ledit mode de fonctionnement cadencé (16), indépendamment d'un état d'utilisation de la pièce (11a ; 11b), le débit d'air envoyé dans la pièce étant désactivé lorsque les grandeurs de confort régulées sont situées à l'intérieur de la bande de confort respective associée, et
dans ledit mode de fonctionnement cadencé (16), lorsqu'au moins l'une des grandeurs de confort (TR ; AQ) régulées est située à l'extérieur de la bande de confort qui lui est associée, et dans le but de provoquer une modification nécessaire de la valeur actuelle de ladite grandeur de confort (TR ; AQ), le débit d'air minimisé par rapport au débit volumique étant envoyé dans la pièce (8a ; 8b), lequel débit d'air étant traité par une installation de ventilation primaire (1), de telle manière que le débit volumique du débit d'air envoyé est minimisé,
**caractérisé en ce que**
il est défini pour ladite au moins une grandeur de confort régulée d'une pièce, une bande de confort intérieure, une bande de confort extérieure et une bande de confort centrale, les deux valeurs limites de la bande de confort centrale étant situées sur une coordonnée associée à la grandeur de confort à l'intérieur de la bande de confort extérieure, et les deux valeurs limites de la bande de confort intérieure étant situées sur la coordonnée à l'intérieur de la bande de confort centrale, et
**en ce qu'**une désactivation du débit volumique minimisé est demandée lorsqu'une valeur détectée pour la grandeur de confort d'une pièce est située dans la bande de confort intérieure, et **en ce qu'**une activation du débit volumique minimisé est demandée lorsque la valeur détectée pour la grandeur de confort d'une pièce quitte la bande de confort centrale et atteint la bande de confort extérieure (40, 41).

2. Procédé selon la revendication 1, **caractérisé en ce que** le débit d'air envoyé dans la pièce (8a, 8b) est désactivé grâce à la fermeture d'un clapet (7) placé dans le canal d'air frais (6a) de la pièce (8a ; 8b) par un signal (27 ; 28 ; 29 ; 30) du mécanisme régulateur (15a ; 15b).

3. Procédé selon l'une des revendications précédentes, **caractérisé en ce que** le débit d'air envoyé dans la pièce est désactivé grâce à la désactivation de l'installation de ventilation primaire (1) par un signal (23 ; 24 ; 25 ; 26) du mécanisme régulateur (15a ; 15b ; 17).

4. Procédé selon l'une des revendications précédentes, **caractérisé en ce que**, lorsqu'une valeur effective détectée pour la pièce par le mécanisme régulateur de ladite au moins une grandeur de confort régulée est située à l'extérieur de la bande de confort centrale correspondante, la valeur de consigne relative à ladite grandeur de confort du débit d'air envoyé de l'installation de ventilation primaire (1) est modifiée de façon substantielle par un signal du mécanisme régulateur et est mise à une valeur prédéterminée, de manière à provoquer un déplacement accéléré de la valeur effective de ladite grandeur de confort dans la bande de confort intérieure.

5. Procédé selon l'une des revendications précédentes, **caractérisé en ce que**, lorsqu'une valeur effective détectée pour la pièce par le mécanisme régulateur de ladite au moins une grandeur de confort régulée est située à l'extérieur de la bande de confort centrale correspondante, une valeur de consigne relative à ladite grandeur de confort du débit d'air envoyé d'un module de post-traitement de l'air associé à la pièce est modifiée de façon substantielle par un signal du mécanisme régulateur et est mise à une valeur prédéterminée, de manière à provoquer un déplacement accéléré de la valeur effective de ladite grandeur de confort dans la bande de confort intérieure.

6. Procédé selon l'une des revendications précédentes, **caractérisé en ce que**, lorsque les grandeurs de confort régulées d'une certaine pièce sont situées à l'intérieur des bandes de confort intérieures correspondantes, un ventilateur placé dans un canal d'air vicié de ladite pièce est désactivé.

7. Procédé selon l'une des revendications précédentes, **caractérisé en ce que** l'installation de ventilation primaire est désactivé lorsque les grandeurs de confort régulées sont situées dans toutes les pièces pouvant être alimentées par l'installation de ventilation primaire à l'intérieur des bandes de confort intérieures correspondantes, ou lorsque toutes les pièces pouvant être alimentées par l'installation de ventilation primaire ne sont pas occupées.

8. Procédé selon l'une des revendications précédentes, **caractérisé en ce qu'**une quantité des grandeurs de confort d'une pièce régulées par le mécanisme régulateur comprend la température ambiante.

9. Procédé selon l'une des revendications précédentes, **caractérisé en ce que** la quantité des grandeurs de confort d'une pièce régulées par le mécanisme régulateur comprend la qualité de l'air.

10. Procédé selon l'une des revendications précédentes, **caractérisé en ce que** la quantité des grandeurs de confort d'une pièce régulées par le mécanisme régulateur comprend l'humidité de l'air.
